**Europäisches Patentamt**

**European Patent Office**

**Office européen des brevets**

(11) Veröffentlichungsnummer: **0 309 764**
**A1**

## (12) EUROPÄISCHE PATENTANMELDUNG

(21) Anmeldenummer: **88114349.9**

(22) Anmeldetag: **02.09.88**

(51) Int. Cl.4: **G02F 1/133 , G09F 13/18 , G01D 11/28**

(30) Priorität: **03.09.87 DE 8711933 U**

(43) Veröffentlichungstag der Anmeldung:
**05.04.89 Patentblatt 89/14**

(84) Benannte Vertragsstaaten:
**CH DE FR GB IT LI SE**

(71) Anmelder: **TA TRIUMPH-ADLER Aktiengesellschaft**
**Fürther Strasse 212**
**D-8500 Nürnberg 80(DE)**

(72) Erfinder: **Horndasch, Georg**
**Fabrikstrasse 11**
**D-8508 Wendelstein(DE)**

(54) **Vorrichtung zum Beleuchten von durchscheinenden Anzeigefeldern.**

(57) Die Erfindung bezieht sich auf eine Vorrichtung zur Beleuchtung von durchscheinenden Anzeigefeldern (1) mittels eines lichtleitfähigen Prismas (2) unter Verwendung von das Prisma (2) durchleuchtenden Lampen (4). Um eine gleichmäßige Ausleuchtung des Anzeigefeldes (1) zu erreichen, weist das Prisma (2) in dem Bereich der am weitesten von den Lampen (4) entfernt ist, eine die Lichtstrahlen auf das Anzeigefeld (1) hin bündelnde Verformung (6) auf.

Fig. 1

EP 0 309 764 A1

## Vorrichtung zum Beleuchten von durchscheinenden Anzeigefeldern

Gegenstand der Erfindung ist eine Vorrichtung zum Beleuchten von durchscheinenden Anzeigefeldern mittels eines lichtleitfähigen Prismas unter Verwendung von das Prisma durchleuchtenden Lampen. Derartige Anzeigefelder werden vornehmlich in Büromaschinen insbesondere Schreibmaschinen zur Anzeige des mittels der Tastatur eingegebenen Textes bzw. zur Darstellung des aus einem Speicher der Schreibmaschine abgerufenen Textes verwendet. Bewährt haben sich hierzu sogenannte LCD-Anzeigen, deren Schriftzeichen mittels Umlicht oder Durchlicht sichtbar gemacht werden. Um eine bei wechselndem Umlicht annähernd gleichbleibende Anzeigequalität zu erreichen, kommen häufig LCD-Durchlichtanzeigen zur Anwendung. Dabei ist es bekannt, hinter dem Anzeigefeld eine kleine Leuchtstoffröhre anzuordnen. Diese beleuchtet das Anzeigefeld von hinten, so daß sich über die gesamte Länge des Anzeigefeldes eine einigermaßen gleichmäßige Ausleuchtung ergibt. Diese Leuchtstofflampen sind jedoch sehr teuer, insbesondere auch deshalb, weil sie besondere Maßnahmen im Hinblick auf ihre Stromversorgung erforderlich machen. Andere Lichtquellen wie z.B. Niedervoltlampen sind ohne zusätzliche Hilfsmittel ebenfalls problematisch, weil eine ganze Lampenkette vorgesehen sein müßte, um über die Länge des Anzeigefeldes eine gleichmäßige Ausleuchtung zu erreichen. Auch dies würde zu sehr hohen Herstellungskosten führen.

Der Erfindung liegt die Aufgabe zugrunde, eine Vorrichtung zum Beleuchten derartiger Anzeigefelder zu schaffen, die preiswert in der Herstellung und der Montage und sicher im Betrieb ist, jedoch eine gleichmäßige Ausleuchtung des Anzeigefeldes gewährleistet. Hierzu eignet sich eine Vorrichtung, die nach den Merkmalen des kennzeichnenden Teiles des Anspruchs 1 ausgebildet ist. Demnach macht sich die Erfindung die Vorteile zunutze, die in anderen Anwendungsfällen z.B. in der Kraftfahrzeugtechnik mit Erfolg zur Anwendung kommen. Derartige lichtleitfähige Prismen haben den Vorteil, auch über längere Strecken hinweg von einer einzigen Lichtquelle aus ganz bestimmte Punkte auszuleuchten um deren Symbole sichtbar zu machen. Anders als bei den bekannten Anwendungsfällen tritt jedoch bei einem Anzeigefeld wie es in Schreibmaschinen verwendet muß, das Problem der gleichmäßigen Ausleuchtung auf, um störende Lichteffekte zu vermeiden. Die im Anspruch 1 angegebene Ausbildung des lichtleitfähigen Prismas hat zur Folge, daß in dem Bereich, der am weitesten von den Lampen entfernt ist, eine besondere Bündelung der Lichtstrahlen erfolgt, so daß auch dieser Bereich des Anzeigefeldes etwa mit der gleichen Intensität ausgeleuchtet wird, wie der Anfangs- und Endbereich des Anzeigefeldes nahe den Lampen. Besonders vorteilhaft wirkt sich dabei aus, daß der gewünschte Effekt der gleichmäßigen Ausleuchtung des Anzeigefeldes praktisch ohne zusätzliche Kosten erreicht werden kann. Die Verformung des Prismas ergibt sich bei dessen Herstellung durch eine entsprechende Ausbildung des Spritzgußwerkzeuges. Eine weitere Verbesserung der Beleuchtungsqualität kann nach den Merkmalen des Anspruches 2 dadurch erreicht werden, daß zwischen dem Prisma und dem Anzeigefeld eine Scheibe angeordnet ist, die das aus dem Prisma ausdrehende Licht zerstreut. Auch dies trägt zu einer gleichmäßigeren Lichtverteilung bei und verhindert gleichzeitig das Auftreten von störenden Lichtreflexen. In besonderen Fällen, insbesondere dann, wenn das Anzeigefeld und somit auch das Prisma verhältnismäßig lang sein müssen, kann nach den Merkmalen des Anspruches 3 die dem Anzeigefeld abgewandte Seite des Prismas mit einer Riffelung versehen sein, die senkrecht zur Längsachse des Prismas verläuft. Diese Riffelung muß nicht über die gesamte Länge des Prismas gleichmäßig sein, sondern sie kann so ausgebildet sein, daß in dem Mittelbereich des Anzeigefeldes eine stärkere Lichtbündelung erfolgt, so daß auch dies zu einer gleichmäßigen Ausleuchtung des Anzeigefeldes beiträgt.

Je nachdem, welche äußeren Umstände vorliegen und welche Fläche auszuleuchten ist, können unterschiedliche Ausbildungen des Prismas möglich sein. Wesentlich ist, daß in dem Bereich, der normalerweise schlechter ausgeleuchtet wäre eine besondere Bündelung des Lichtes erfolgt. Die weiteren, von solchen Lichtleitprismen bekannten Vorzüge wie z.B. Verspiegelung bestimmter Außenflächen durch Lackieren oder Bedampfen können auch bei dem vorliegenden Prisma zur Anwendung kommen. Um von vornherein eine bessere Lichtausbeute der Lampen zu erreichen, können diese nach den Merkmalen des Anspruches 4 von Reflektoren umgeben sein, die zweckmäßigerweise so angeordnet sind, daß das Licht parallel zur Längsachse des Prismas abgestrahlt wird.

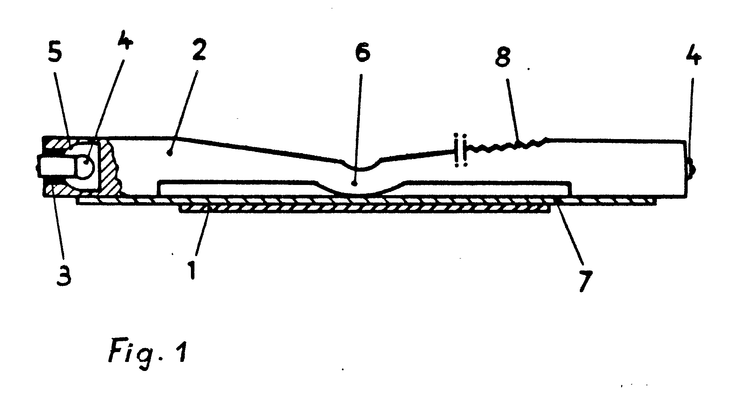

Die Zeichnung veranschaulicht ein Ausführungsbeispiel der Erfindung in schematischer Darstellung. Sie zeigt eine Draufsicht mit einem Teilschnitt durch die Vorrichtung.

Mit 1 ist das Anzeigefeld bezeichnet. Es handelt sich vorzugsweise um eine sogenannte LCD-Anzeige. Das Prisma 2 besteht aus Kunststoff und hat lichtleitfähige Eigenschaften. An den Enden des Prismas 2 werden mittels der Fassungen 3 Lampen 4 eingesetzt, wobei der sie umgebende Hohlraum in dem Prisma 2 mit einer Schlicht versehen ist, die einen Reflektor 5 bildet. Im mittleren Bereich des Prismas 2 ist eine Verformung 6 vorgesehen, die auf das Anzeigefeld 1 hin gerichtet ist. Zwischen dem Prisma 2 und dem Anzeigefeld 1 wird zweckmäßigerweise eine Scheibe 7 eingesetzt, die lichtstreuende Eigenschaften hat. Wie mit Bezug auf die Zeichnung im rechten Teil des Prismas 2 dargestellt, kann die, der Anzeigefläche 1 abgewandte Seite des Prismas 2 mit einer Riffelung 8 versehen sein, die sich senkrecht zur Längsachse des Prismas 2 erstreckt.

Aus Gründen der zeichnerischen Einfachheit sind Gehäuseteile, Montageteile usw. nicht dargestellt, diese haben mit der eigentlichen Erfindung nichts zu tun und können unschwer dem jeweiligen Anwendungsfall angepaßt sein.

Wie aus der Zeichnung unschwer entnommen werden kann, wird das von den Lampen 4 ausgehende Licht zunächst durch die Reflektoren gebündelt und parallel zur Längsachse des Prismas abgestrahlt. Durch die lackierten oder bedampften Außenflächen des Prismas 2 wird das Licht dann auf das Anzeigefeld 1 hin ausgerichtet. Durch die Verformung 6 im Prisma 2 erfolgt eine zusätzliche Bündelung des Lichtes, so daß auch der Mittenbereich des Anzeigefeldes 1 gut ausgeleuchtet wird. Die Gleichmäßigkeit der Ausleuchtung des Anzeigefeldes 1 kann durch die lichtstreuende Scheibe 7 noch erhöht werden. Diese verhindert außerdem, daß störende Lichtreflexe auf dem Anzeigefeld 1 sichtbar werden.

Wie bereits erwähnt, kann die spezielle konstruktive Ausgestaltung des Prismas 2 den jeweiligen Gegebenheiten hinsichtlich des zu beleuchtenden Anzeigefeldes gewählt werden. Wesentlich ist, daß eine gleichmäßige Ausleuchtung des Anzeigefeldes 1 erzielt wird, die auch ein ermüdungsfreies Arbeiten an einer Büromaschine über einen längeren Zeitraum hinweg zuläßt.

## Ansprüche

1. Vorrichtung zum Beleuchten von durchscheinenden Anzeigefeldern mittels eines lichtleitfähigen Prismas unter Verwendung von das Prisma durchleuchtenden Lampen, **dadurch gekennzeichnet, daß** das Prisma (2) in dem Bereich, der am weitesten von einer Lampe (4) entfernt ist, eine die Lichtstrahlen bündelnde, auf das Anzeigefeld (1) hin gerichtete Verformung (6) aufweist.

2. Vorrichtung nach Anspruch 1, **dadurch gekennzeichnet, daß** zwischen dem Prisma (2) und dem Anzeigefeld (1) eine das Licht streuende Scheibe (7) angeordnet ist.

3. Vorrichtung nach Ansprüchen 1 und 2, **dadurch gekennzeichnet, daß** die dem Anzeigefeld (1) abgewandte Seite des Prismas (2) eine senkrecht zu dessen Längsachse verlaufende Riffelung (8) aufweist.

4. Vorrichtung nach Ansprüchen 1 bis 3, **dadurch gekennzeichnet, daß** im Prisma (2) im Bereich der Lampen (4) Reflektoren (5) angeordnet sind.

Fig. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 213 688 (REFAC ELECTRONICS CORP.) <br> * Ansprüche 1-2,7; Seite 8, Zeile 1 - Seite 9, Zeile 21; Figuren 1-3 * <br> --- | 1 | G 02 F 1/133 <br> G 09 F 13/18 <br> G 01 D 11/28 |
| Y | FR-A- 884 319 (ASKANIA-WERKE AG.) <br> * Seite 1, Zeilen 22-54; Seite 2, Zeilen 63-70; Seite 3, Zeilen 1-16; Figuren 1-2 * <br> --- | 1 | |
| A | DE-A-3 223 706 (JOBO LABORTECHNIK GmbH & CO.KG) <br> * Ansprüche 1,4,6,10; Seite 11, Zeile 13; Seite 13- Zeile 18; Figuren 1,2 * <br> --- | 2,4 | |
| A | FR-A-2 536 504 (VALEO) <br> * Ansprüche 1,3,5,6,8,10; Seite 5, Zeile 22 - Seite 6, Zeile 31; Figur 3 * <br> --- | 3 | |
| A | GB-A-2 164 138 (KEI MORI) <br> * Anspruch 1; Seite 2, Zeilen 63-93; Seite 3, Zeilen 81-110; Figur 3 * <br> ----- | 1 | |

RECHERCHIERTE
SACHGEBIETE (Int. Cl.4)

G 09 F
G 02 F
G 04 G
G 01 D
G 02 B
G 12 B
F 21 S

Der vorliegende Recherchenbericht wurde für alle Patentansprüche erstellt

| Recherchenort | Abschlußdatum der Recherche | Prüfer |
|---|---|---|
| DEN HAAG | 13-12-1988 | FRANSEN L.J.L. |